# FASCICULE DE BREVET EUROPEEN

(11) **EP 3 879 170 B1**
(45) Date de publication et mention de la délivrance du brevet: **27.04.2022**
(21) Numéro de dépôt: 21305282.2
(22) Date de dépôt: 09.03.2021
(51) Int. Cl.: F21S 41/143, F21S 41/147, G02B 3/06, G02B 19/00

(54) **LENTILLE, FEU DE TRAVAIL COMPORTANT UNE TELLE LENTILLE, ET VÉHICULE**
LINSE, ARBEITSLEUCHTE, DIE EINE SOLCHE LINSE UMFASST, UND FAHRZEUG
LENS, WORK LIGHT COMPRISING SUCH A LENS, AND VEHICLE

(30) Priorité: 12.03.2020 FR 2002444
(43) Date de publication de la demande: 15.09.2021
(73) Titulaire: Vignal Systems, 69960 Corbas (FR)
(72) Inventeur: MEJEAN, Laurent, 69960 CORBAS (FR)
(74) Mandataire: Germain Maureau

(56) Documents cités:
- EP-A1- 2 816 277
- FR-A1- 2 992 738

## Description

L'invention concerne une lentille destinée à être placée sur le trajet des rayons lumineux émis par une source lumineuse. L'invention concerne également un feu de travail comprenant une pluralité de sources lumineuses et une telle lentille disposée en regard d'au moins l'une des sources lumineuses. L'invention concerne aussi un véhicule, en particulier véhicule lourd tel qu'un camion, comprenant au moins un tel feu de travail.

Certains véhicules sont équipés d'un feu de travail, c'est-à-dire un boîtier contenant des sources lumineuses aptes à éclairer la zone souhaitée, comme un projecteur. Cela concerne tout particulièrement les véhicules lourds tels que les camions, notamment les véhicules comportant un conteneur arrière où des objets doivent être chargés / d'où des objets doivent être déchargés. Il peut notamment s'agir de véhicules de livraison équipés d'un hayon élévateur, frigorifiques ou non, de camions poubelle, etc. Pour que ces opérations de chargement / déchargement soient effectuées correctement, sans difficulté particulière et en toute sécurité, il est préférable d'éclairer la zone de travail, et ce d'autant plus que ces véhicules sont souvent utilisés tôt le matin, lorsque subsiste une certaine obscurité. Les feux de travail peuvent également équiper des engins de chantier.

De façon classique, un feu de travail comporte un boîtier qui est monté sur le véhicule via un support. Le support peut être conçu pour permettre d'incliner le boîtier, afin de diriger le faisceau lumineux de façon appropriée pour obtenir un éclairage satisfaisant de la zone de travail.

Du fait de sa fonction, le feu de travail doit produire un éclairage d'une intensité suffisante pour éclairer la zone souhaitée. C'est pourquoi, malgré la conception précitée permettant une inclinaison, en particulier vers le sol, les feux de travail restent le plus souvent très éblouissants pour les personnes circulant autour du véhicule. Ceci est très désagréable, et peut même présenter certains risques. Les documents EP2816277 et FR2992738 divulguent des lentilles connues pour projecteur de véhicule.

La présente invention vise à remédier aux inconvénients mentionnés ci-dessus.

A cet effet, et selon un premier aspect, l'invention concerne une lentille présentant un axe optique s'étendant selon un axe dit longitudinal (X), destinée à être placée sur le trajet des rayons lumineux émis par une source lumineuse de sorte que l'axe optique de la lentille soit parallèle à l'axe principal d'émission de la source lumineuse. La lentille présente, dans le sens de propagation des rayons lumineux, une face d'entrée et une face de sortie, et possède une forme générale bombée en direction de la face de sortie. La lentille définit un axe dit vertical (Z), un axe dit transversal (Y) et présente en outre un premier plan médian dit vertical, s'étendant dans un plan (X,Z) et un deuxième plan médian dit horizontal, s'étendant dans un plan (Y,Z).

Selon une définition générale de l'invention, la face d'entrée comporte :
- une partie supérieure située au-dessus du plan médian horizontal, qui est configurée pour dévier les rayons lumineux, au moins selon l'axe vertical, de sorte qu'ils soient sensiblement parallèles au plan médian horizontal ;
- et une partie inférieure située au-dessous du plan médian horizontal, qui est configurée pour réduire l'angle d'ouverture verticale du faisceau lumineux, selon l'axe vertical, entre le plan médian horizontal et une limite inférieure.

De plus, la face de sortie comporte :
- une partie verticale centrale sensiblement plane et orthogonale à l'axe optique ;
- de part et d'autre de la partie verticale centrale, une partie latérale configurée pour dévier chaque rayon lumineux en direction du plan médian vertical, selon une amplitude de déviation qui est d'autant plus importante que le point d'incidence du rayon lumineux sur ladite partie latérale est proche du plan médian vertical.

Ainsi, la lentille selon l'invention permet, via la géométrie particulière de la face d'entrée, de collimater la lumière reçue dans la partie supérieure de la lentille, parallèlement à l'axe optique, ce qui a pour effet de créer pour l'observateur une zone supérieure non éclairée, typiquement à la hauteur du regard, et ainsi de limiter considérablement l'éblouissement. En outre, la partie inférieure de la face d'entrée permet de collecter le maximum de lumière émise par la source lumineuse et de la concentrer vers une zone directement utile, c'est-à-dire, dans l'application à un feu de travail, vers la zone de travail à éclairer. De plus, la géométrie particulière de la face de sortie de la lentille se traduit par une répartition de l'intensité lumineuse dans la zone éclairée selon une distribution non homogène, par exemple de type gaussienne, de préférence à la fois selon l'axe vertical et selon l'axe transversal. Une telle répartition permet à la fois l'obtention d'une intensité lumineuse maximale au voisinage de l'axe optique, et une transition progressive vers les zones moins lumineuses, pour une grande efficacité d'éclairage et un confort visuel accru pour l'observateur.

La lentille selon l'invention permet donc de concilier l'efficacité du feu de travail - par la collecte d'une très grande quantité de la lumière émise par la source lumineuse et la concentration de la lumière collectée majoritairement vers une zone principale, au voisinage de l'axe optique - et le confort visuel pour les personnes à proximité du feu de travail - par la création d'une zone non éclairée limitant l'éblouissement et par la répartition, sans discontinuité brutale, de l'intensité lumineuse autour de la zone principale la plus éclairée.

Un autre avantage de l'invention est que l'effet anti-éblouissement est obtenu par la conception de la lentille, et n'implique donc pas la mise en œuvre d'obstacles bloquant la lumière. Il s'ensuit une simplification de montage, un risque d'endommagement diminué du feu de travail, et une répartition plus satisfaisante de l'intensité lumineuse dans la zone éclairée.

La face d'entrée peut présenter, dans un plan (X,Z), un profil concave formant un bossage dirigé à l'opposé de la face de sortie. Le bossage est par exemple situé au voisinage de l'axe optique.

Selon une réalisation possible, la face d'entrée possède une forme de type « en selle de cheval » (c'est-à-dire en forme de paraboloïde hyperbolique), la face d'entrée présentant, dans un plan (X,Y), un profil concave et, dans un plan (X,Z), un profil convexe formant un bossage dirigé à l'opposé de la face de sortie.

Selon les applications, le plan médian vertical peut être un plan de symétrie de la face d'entrée de la lentille.

La partie supérieure et/ou la partie inférieure de la face d'entrée peut en outre être configurée pour réduire l'angle d'ouverture horizontale du faisceau lumineux, selon l'axe transversal. De la sorte, une grande partie de la lumière émise par la source lumineuse peut être collectée et concentrée, c'est-à-dire dirigée vers la zone souhaitée. Selon une réalisation possible le faisceau lumineux est réduit de façon symétrique par rapport au plan médian vertical, c'est-à-dire de façon identique de chaque côté de ce plan.

Chacune des parties latérales de la face de sortie peut présenter une forme qui est incurvée autour d'un axe vertical, la concavité étant tournée vers la face d'entrée, et qui présente un rayon de courbure, dans un plan (X,Y), qui augmente lorsque l'on s'éloigne du plan médian vertical. En d'autres termes, plus on s'éloigne du plan médian vertical, plus la forme est plane. Ainsi, chacune des parties latérales possède une forme sensiblement cylindrique, mais avec une courbure variable.

Selon les applications, le plan médian vertical et/ou le plan médian horizontal peut être un plan de symétrie de la face de sortie de la lentille.

Selon un deuxième aspect, l'invention concerne un feu de travail comportant un boîtier, une pluralité de sources lumineuses disposées dans le boîtier, et une lentille telle que précédemment décrite, disposée en regard d'au moins l'une des sources lumineuses, sur le trajet des rayons lumineux émis par ladite source lumineuse, et de sorte que l'axe optique de la lentille soit parallèle à l'axe principal d'émission de ladite source lumineuse.

Selon un troisième aspect, l'invention concerne un véhicule, en particulier véhicule lourd tel qu'un camion, comprenant au moins un feu de travail tel que précédemment décrit. Le feu de travail est monté sur le véhicule au moyen d'un support qui est de préférence configuré pour permettre d'incliner le feu de travail autour d'un axe horizontal.

On décrit à présent, à titre d'exemple non limitatif, un mode de réalisation possible de l'invention, en référence aux figures annexées :
La figure 1 est une vue en perspective éclatée d'un feu de travail selon un mode de réalisation de l'invention, comportant une pluralité de lentilles ;
La figure 2 est une vue en perspective d'une source lumineuse et d'une lentille placée devant la source lumineuse ;
La figure 3 est une vue similaire à la figure 2, selon une autre orientation ;
La figure 4 est une vue latérale de la lentille ;
La figure 5 est une vue schématique en coupe de la lentille, dans le plan médian vertical ;
La figure 6 est une vue de dessus de la lentille ;
La figure 7 est une vue schématique en plan de la face d'entrée de la lentille ;
La figure 8 est une vue schématique en plan de la face de sortie de la lentille ;
La figure 9 illustre schématiquement, dans le plan médian vertical, le trajet des rayons émis par une source lumineuse et passant par la lentille selon l'invention ;
La figure 10 illustre schématiquement, dans le plan médian horizontal, le trajet des rayons émis par une source lumineuse et passant par la lentille selon l'invention ;
La figure 11 illustre schématiquement la répartition de l'intensité lumineuse obtenue après passage par la lentille du faisceau lumineux émis par la source lumineuse.

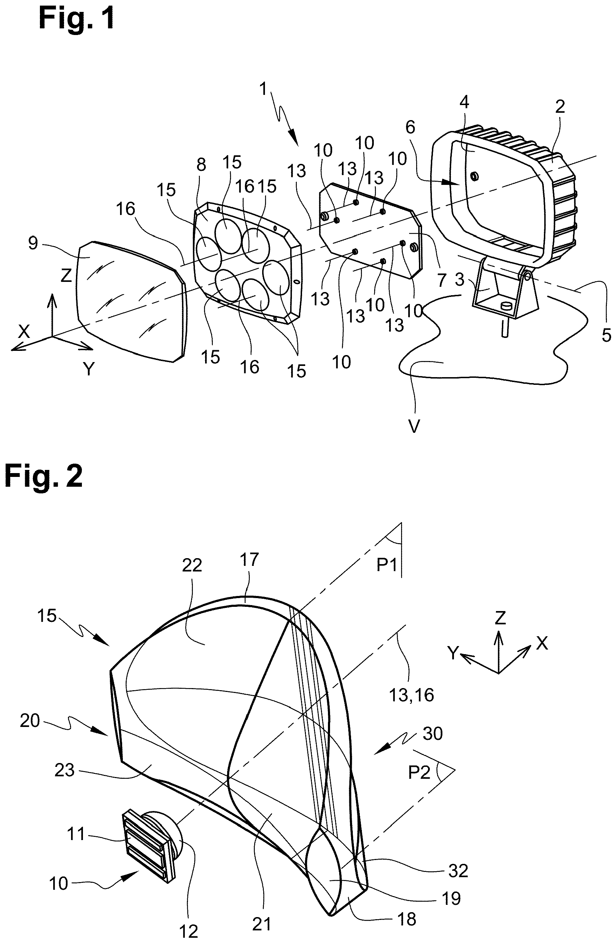

La figure 1 représente, en perspective éclatée, un feu de travail 1.

Le feu de travail 1 comporte un boîtier 2 qui est monté sur un support 3 lui-même destiné à être monté sur un véhicule V, en particulier véhicule lourd tel qu'un camion. Par exemple, le support 3 peut être fixé au véhicule V, tandis que le boîtier 2 peut être monté sur le support 3 de façon pivotante autour d'un axe 5. L'axe de pivotement 5 peut être horizontal et orienté transversalement, de façon que le faisceau lumineux produit par le feu de travail 1 puisse être incliné vers le sol.

Le boîtier peut présenter une paroi de fond 4 et, à l'opposé de celle-ci, une face ouverte 6.

Le feu de travail 1 comporte une pluralité de sources lumineuses 10, qui peuvent typiquement être des LED (diodes électroluminescentes). On peut par exemple avoir entre cinq et dix sources lumineuses dans un feu de travail 1. Les sources lumineuses 10 peuvent comporter une base 11 et un capot 12, et présentent un axe principal d'émission 13. Les sources lumineuses 10 sont disposées dans le boîtier 2 par exemple en étant montées sur une plaque 7, elle-même fixée dans le boîtier 2. Les sources lumineuses 10 peuvent être montées de sorte que leurs axes principaux d'émission 13 soient parallèles entre eux et par exemple orthogonaux à la face ouverte 6 du boîtier 2.

Une lentille 15 est disposée en regard d'au moins l'une, et de préférence de chacune, des sources lumineuses 10, sur le trajet des rayons lumineux émis par ladite source lumineuse 10. Chaque lentille 15 présente un axe optique 16 et est de préférence disposée de sorte que cet axe optique 16 soit parallèle à l'axe principal d'émission 13 de la source lumineuse correspondante, voire confondu avec cet axe principal d'émission 13. La source lumineuse 10 est placée au foyer de la lentille 15 correspondante.

Les lentilles 15 peuvent être intégrées à une paroi transparente 8, typiquement réalisées d'une seule pièce par moulage d'une matière plastique.

Une vitre 9 peut en outre être prévue en regard de la paroi transparente 8, pour fermer la face ouverte 6 du boîtier 2.

Le feu de travail 1 forme un feu d'éclairage puissant, également appelé phare de travail ou projecteur de travail, permettant d'éclairer une zone d'intervention d'un opérateur pour faciliter et sécuriser son travail. Le véhicule V peut être équipé de plusieurs feux de travail 1, selon les besoins.

La lentille 15 définit un axe dit longitudinal (X), parallèle à l'axe optique 16, un axe dit vertical (Z), et un axe dit transversal (Y). Dans la réalisation représentée, l'axe longitudinal (X) est orthogonal à la paroi de fond 4 du boîtier 2. L'axe longitudinal (X) est horizontal - si le feu de travail 1 est monté droit, c'est-à-dire n'a pas été pivoté autour de l'axe 5 - de même que l'axe transversal (Y). L'axe (Z) est donc disposé verticalement. Toutefois, d'autres orientations peuvent être envisagées.

La lentille 15 présente un premier plan médian P1 dit vertical, s'étendant dans un plan (X,Z) et un deuxième plan médian P2 dit horizontal, s'étendant dans un plan (Y,Z).

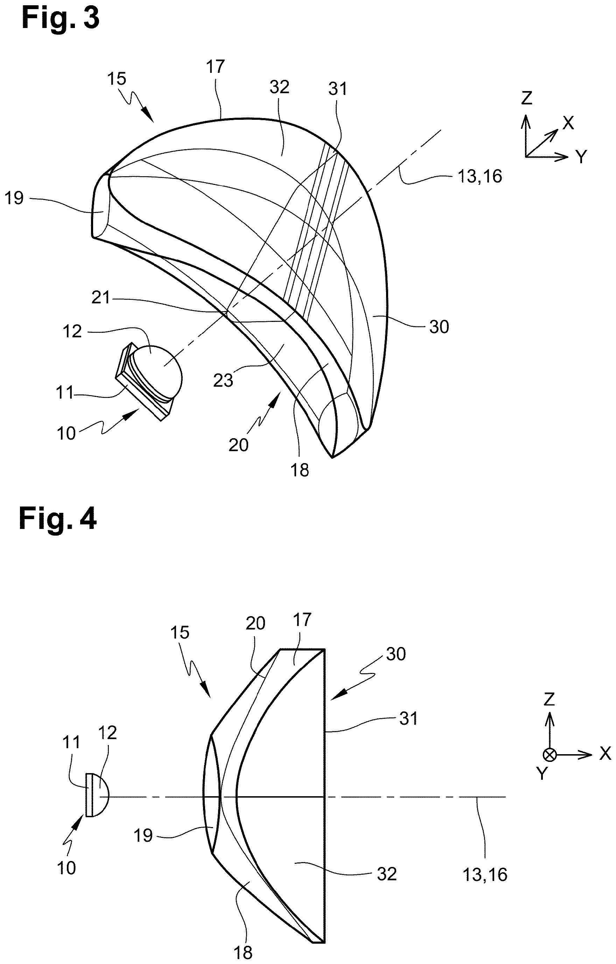

La lentille 15 présente, dans le sens de propagation des rayons lumineux, une face d'entrée 20, plus particulièrement visible sur la figure 2, et une face de sortie 30, plus particulièrement visible sur la figure 3.

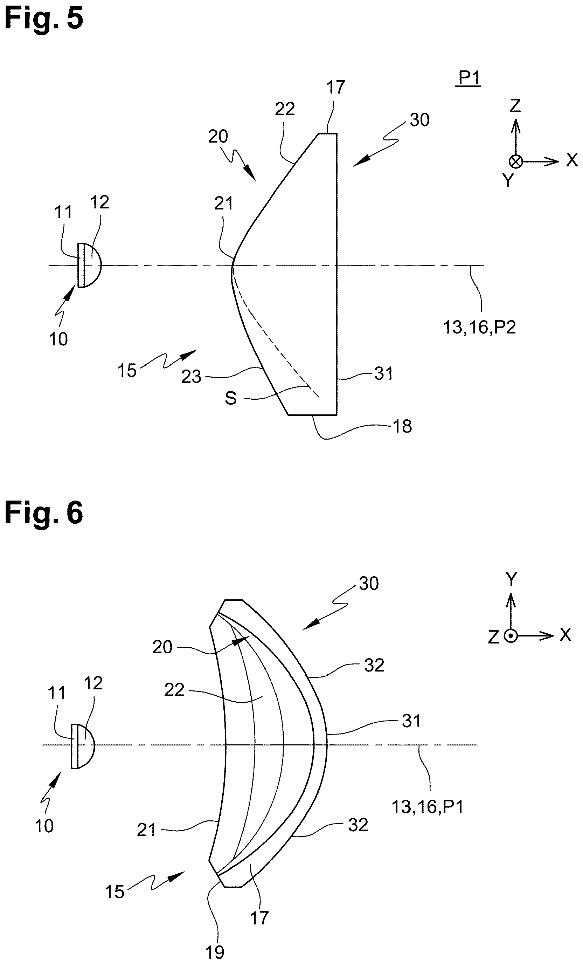

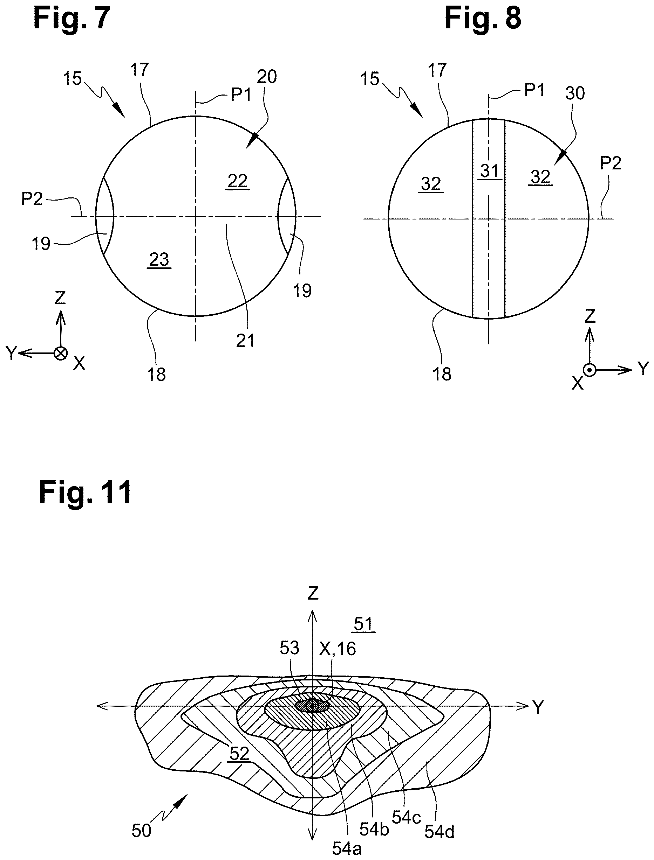

La lentille 15 possède une forme générale bombée en direction de la face de sortie 30. En d'autres termes, la lentille 15 présente une forme générale arrondie, similaire à une coupe, mais dont la forme n'est pas hémisphérique. La lentille 15 présente un contour qui, lorsqu'elle est vue selon l'axe optique 16, est sensiblement circulaire, comme illustré sur les figures 6 et 7. Le contour comporte un bord supérieur 17 et un bord inférieur 18 formant chacun sensiblement une bande en arc de cercle, de part et d'autre du plan médian horizontal P2 ; en outre, une surface plane 19 et tournée à l'opposé de la face de sortie 30 est ménagée au voisinage du plan médian horizontal P2. La surface plane 19 permet d'éviter une réflexion totale parasite de la lumière dans la lentille 15.

Comme on le voit tout particulièrement sur les figures 2, 4 et 5, la face d'entrée 20 peut posséder une forme de type « en selle de cheval », c'est-à-dire présenter :
- dans un plan (X,Y), un profil concave, comme illustré notamment sur la figure 5 ;
- et dans un plan (X,Z), un profil convexe formant un bossage 21 dirigé à l'opposé de la face de sortie 30, comme illustré notamment sur la figure 4, le bossage 21 pouvant être situé au voisinage de l'axe optique 16.

Dans l'application illustrée, le plan médian vertical P1 est un plan de symétrie de la face d'entrée 20 de la lentille 15. Toutefois, pour d'autres applications où l'on souhaite obtenir un éclairage non symétrique, une configuration non symétrique par rapport à ce plan P1 est envisageable.

En revanche, le plan médian horizontal P2 n'est pas un plan de symétrie de la face d'entrée 20.

En effet, afin de limiter l'éblouissement généré par la source lumineuse 10, la face d'entrée 20 comporte une partie supérieure 22, située au-dessus du plan médian horizontal P2, qui est configurée pour dévier les rayons lumineux reçus dans ladite partie supérieure 22, au moins selon l'axe vertical (Z), de sorte que ces rayons lumineux soient sensiblement parallèles au plan médian horizontal P2 après leur passage par la face d'entrée 20.

Par ailleurs, le faisceau lumineux qui est émis par la source lumineuse 10 vers le bas génère beaucoup moins d'éblouissement pour un observateur. C'est pourquoi la fonction - et donc la géométrie - de la partie inférieure 23 de la face d'entrée 20 de la lentille 15 est différente. Plus spécifiquement, la partie inférieure 23, située au-dessous du plan médian horizontal P2, est configurée pour réduire l'angle d'ouverture verticale α du faisceau lumineux, selon l'axe vertical (Z), entre le plan médian horizontal (P2) et une limite inférieure. De la sorte, l'ensemble du faisceau lumineux reçu par la partie inférieure 23 de la face d'entrée 20 de la lentille 15 est collecté et amené vers une zone utile, c'est-à-dire une zone que l'on souhaite éclairer, au lieu d'être simplement transmis vers des zones d'intérêt moindre. Ainsi, in fine, une plus grande intensité lumineuse sera obtenue dans la zone à éclairer.

De façon concrète, la partie supérieure 22 de la face d'entrée 20 peut s'étendre entre le plan médian horizontal P2 et le bord supérieur 17, et la partie inférieure 23 peut s'étendre entre le plan médian horizontal P2 et le bord inférieur 18.

Selon une réalisation possible, et comme on le voit sur la figure 5, dans un plan (X,Z), au moins au voisinage du plan médian vertical P1, et à distance du bossage, la partie supérieure 22 de la face d'entrée 20 est sensiblement plane ou possède un très grand rayon de courbure. En outre, la partie inférieure 23 est sensiblement plane ou possède un très grand rayon de courbure, mais n'est pas le symétrique de la partie supérieure 22 par rapport à l'axe optique 16. La figure 5 représente le symétrique S de la partie supérieure 22 par rapport à l'axe optique 16 en pointillés. Plus précisément, par rapport à ce symétrique, la partie inférieure 23 peut être décalée le long de l'axe optique 16 en s'éloignant de la face de sortie 30, et/ou l'angle aigu formé entre ladite partie inférieure 23 et l'axe optique 16 peut être plus grand que l'angle aigu formé entre ledit symétrique S et l'axe optique 16.

La face d'entrée 20-au niveau de la partie supérieure 22 et/ou de la partie inférieure 23 - peut en outre être configurée pour réduire l'angle d'ouverture horizontale β du faisceau lumineux, selon l'axe transversal (Y), c'est-à-dire vu dans un plan (X,Y).

Quant à la face de sortie 30, plus particulièrement visible sur les figures 3 et 8, elle comporte :
- une partie verticale centrale 31 sensiblement plane et orthogonale à l'axe optique 1. La largeur (selon l'axe Y) de la partie centrale peut par exemple être comprise entre 10 et 20 % du diamètre de la lentille 15 ;
- de part et d'autre de la partie verticale centrale 31, une partie latérale 32 configurée pour dévier chaque rayon lumineux en direction du plan médian vertical P1, selon une amplitude de déviation qui est d'autant plus importante que le point d'incidence du rayon lumineux sur ladite partie latérale 32 est proche du plan médian vertical P1.

Ainsi, chacune des parties latérales 32 de la face de sortie 30 peut présenter une forme qui est incurvée autour d'un axe vertical, la concavité étant tournée vers la face d'entrée 20, et qui présente un rayon de courbure, dans un plan (X,Y), qui augmente lorsque l'on s'éloigne du plan médian vertical P1.

Dans l'application illustrée, les plans médian vertical P1 et médian horizontal P2 sont tous deux des plans de symétrie de la face de sortie 30. D'autres configurations sont toutefois envisageables.

La face de sortie 30 permet, en conservant sensiblement la même zone d'éclairage que celle obtenue après le passage du faisceau lumineux à travers la face d'entrée 20, de répartir l'intensité lumineuse de façon non homogène, avec une intensité maximale au voisinage de l'axe optique 16 de la lentille 15 et une diminution progressive de cette intensité, sans transition brutale, au fur et à mesure que l'on s'éloigne de l'axe optique 16.

De façon optionnelle, chacune des parties latérales 32 de la face d'entrée 30 peut en outre être configurée pour modifier l'angle d'ouverture verticale α du faisceau lumineux par rapport à l'axe optique, selon l'axe vertical (Z), entre le plan médian horizontal (P2) et une limite inférieure. Les rayons lumineux sont ainsi déviés en passant de l'intérieur de la lentille 15 au milieu ambiant, après la face de sortie 30.

Cette modification peut être une augmentation de l'angle d'ouverture verticale a. Une telle disposition permet d'augmenter la dimension de la zone éclairée en sortie de la lentille 15, sur la base de la concentration spatiale effectuée par la face d'entrée 20. Une application typique est l'obtention d'un éclairage suffisant au sol dans le cas d'une lentille 16 appartenant à un feu de travail 1.

En variante, on pourrait envisager une diminution de l'angle d'ouverture verticale α du faisceau lumineux, pour au contraire concentrer davantage la lumière vers une zone plus réduite.

La face de sortie 30 - au niveau des parties latérales 32 - peut en outre être configurée pour réduire l'angle d'ouverture horizontale β du faisceau lumineux, selon l'axe transversal (Y), c'est-à-dire vu dans un plan (X,Y).

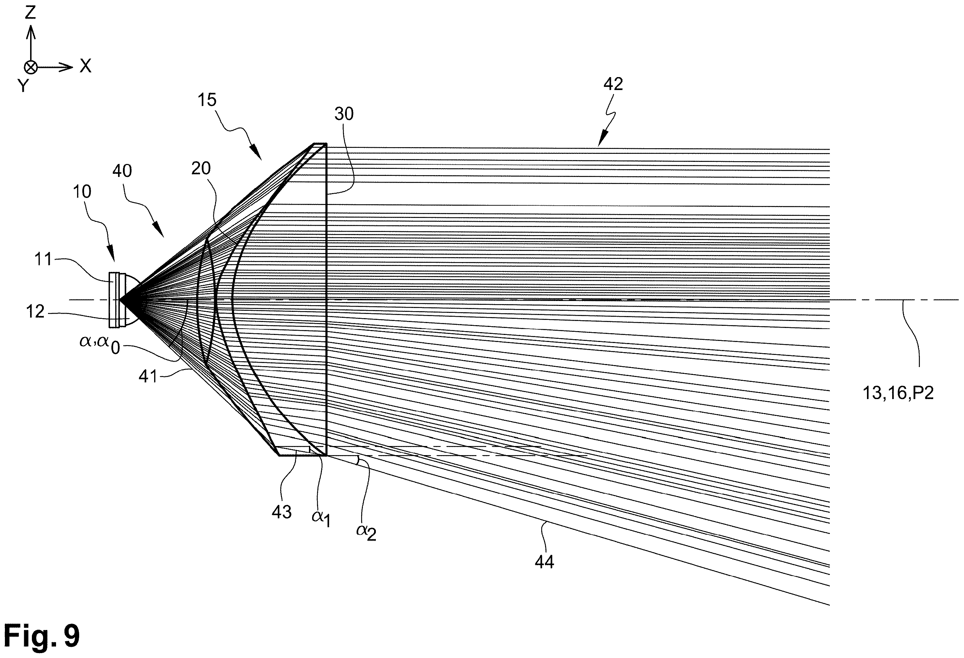

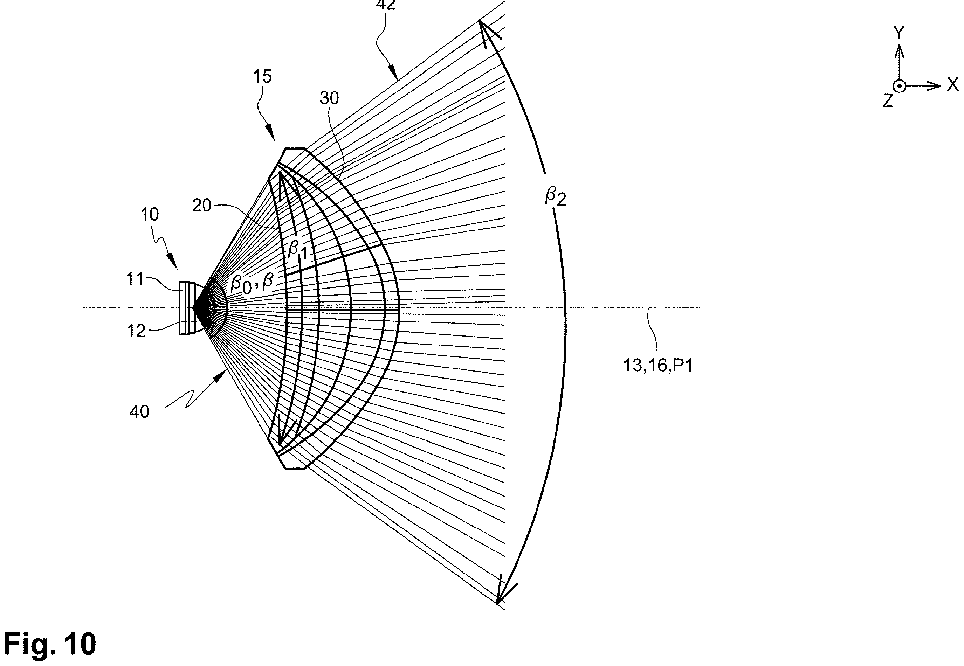

On se réfère à présent aux figures 9 et 10 qui illustrent un faisceau incident 40 émis par la source lumineuse 10 et les déviations qu'il subit au passage de la face d'entrée 20 de la lentille 15, puis de la face de sortie 30, pour former le faisceau transmis 42.

Dans un plan (X,Z), comme illustré sur la figure 9, les rayons du faisceau incident 40 reçus par la partie supérieure 22 de la face d'entrée 20 sont déviés de sorte à être parallèles à l'axe optique 16, dans le faisceau transmis 42, en sortie de la lentille 15. Par ailleurs, les rayons du faisceau incident 40 reçus par la partie inférieure 23 de la face d'entrée 20 sont déviés vers l'axe optique 16, en gardant cependant une inclinaison vers le bas dans le faisceau transmis 42.

La lentille 15 est ainsi configurée pour réduire l'angle d'ouverture verticale α du faisceau lumineux, selon l'axe vertical (Z). En particulier, au-dessous du plan médian horizontal P2 :
- la limite inférieure 41 du faisceau incident 40 est inclinée par rapport à l'axe optique d'un angle α0 ;
- la limite inférieure 43 du faisceau qui résulte du passage par la face d'entrée 20 et qui se propage à l'intérieur de la lentille 15, est inclinée par rapport à l'axe optique d'un angle α1 ;
- et la limite inférieure 44 du faisceau transmis 42, après passage par la face de sortie, est α2.

L'angle α1 est inférieur à a0, et l'angle α2 est inférieur à a0.

Par exemple, pour un angle α0 voisin de 40°, l'angle α2 peut être de l'ordre de 35% à 50% de α0, par exemple voisin de 15 à 20°.

Dans la réalisation représentée, on a une convergence de faisceau au passage de la face d'entrée 20 de la lentille 15 (c'est-à-dire α1 < α0) puis une divergence de faisceau au passage de la face de sortie 30 de la lentille 15 (c'est-à-dire α2 > al). Toutefois, cette réalisation n'est pas limitative, et on pourrait avoir α2 < α1.

Par exemple, pour un angle α0 voisin de 40°, l'angle α1 peut être compris entre 15% et 40 %, voire entre 20% et 35%, voire même entre 20% et 30% de α0, par exemple voisin de 10 à 15°.

Dans un plan (X,Y), comme illustré sur la figure 10, les rayons du faisceau incident 40 reçus par la lentille 15 sont déviés de sorte que leur inclinaison par rapport à l'axe optique 16 soit réduite. En d'autres termes, l'angle d'ouverture horizontale β du faisceau lumineux est réduit. Dans la réalisation représentée, dans la mesure où P1 est un plan de symétrie de la lentille 15, l'angle d'ouverture horizontale β du faisceau lumineux est réduit de façon symétrique de part et d'autre de P1.

La face d'entrée 20 peut générer une première réduction de l'angle d'ouverture horizontale β du faisceau lumineux, de β0 à β1. La face d'entrée 20 peut être conçue pour dévier d'une même amplitude tous les rayons incidents qu'elle reçoit.

La face de sortie 30 peut ou non générer une modification de l'angle d'ouverture horizontale du faisceau lumineux, de β1 à β2. En revanche, la face de sortie 30 est conçue de sorte que plus le point d'incidence d'un rayon lumineux avec la face de sortie 30 est proche de l'axe optique 16, plus ce rayon est dévié vers l'axe optique (dans les parties latérales 32 de la face de sortie 30).

Par exemple, pour un angle β0 voisin de 120°, l'angle β2 peut être de l'ordre de 60% à 70% de β0, par exemple voisin de 70 à 80°.

La figure 11 illustre la répartition lumineuse 50 obtenue grâce à la lentille 15.

D'une part, du fait de la partie supérieure 21 de la face d'entrée 20 est créée une zone non éclairée 51 avantageusement située au niveau du regard d'un observateur, produisant de ce fait l'effet anti-éblouissement recherché.

D'autre part, on obtient une zone éclairée 52 qui est localisée, la zone éclairée étant délimitée horizontalement transversalement par les rayons extrêmes du faisceau transmis 42 entre des angles -β2/2 et +β2/2, et verticalement en partie inférieure par la limite inférieure 44 du faisceau transmis 42, à un angle α2.

Du fait de l'amplitude variable de déviation des rayons lumineux par la lentille 15, la zone éclairée 52 présente une répartition lumineuse non homogène, par exemple de type gaussienne, sur deux axes, avec :
- une portion centrale 53, au voisinage de l'axe optique 16, présentant une intensité lumineuse maximale ;
- des portions globalement annulaires 54a, 54b, 54c, 54d... d'intensité lumineuse décroissante, étant précisé que, bien que sur la figure 11 soient représentées des limites entre les portions 54a-d, l'intensité lumineuse varie de préférence continument et non par paliers.

La lentille 15 selon l'invention permet de collecter une très grande quantité de la lumière émise par la source lumineuse 10, c'est-à-dire une proportion significative du faisceau lumineux émis. En outre, la lentille 15 permet de concentrer le faisceau incident 40 reçu vers une zone à éclairer, par la réduction de l'angle d'ouverture verticale et horizontale du faisceau lumineux. Il s'ensuit que l'intensité lumineuse globale de la zone à éclairer est très importante, et que l'éclairage ainsi produit est particulièrement satisfaisant.

La concentration toute particulière de la lumière vers la portion centrale 53 permet d'obtenir une portion ayant une luminosité intense, par opposition à une répartition uniforme de la lumière qui conduirait à une intensité trop faible, peu exploitable en pratique, tout particulièrement dans l'application à un feu de travail 1.

En outre, l'absence de transition brutale entre des zones de luminosité différentes, tout particulièrement entre une zone très sombre et une zone très éclairée, permet à la fois de créer une zone lumineuse plus étendue et d'être visuellement plus confortable pour un observateur.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

On note notamment que, bien que l'invention ait été décrite dans le cas où l'axe (Z) est vertical, cet axe peut être positionné différemment, la zone non éclairée 51 n'étant alors plus positionnée au-dessus d'un plan horizontal.

## Revendications

1. Lentille (15) présentant un axe optique (16) s'étendant selon un axe dit longitudinal (X), destinée à être placée sur le trajet des rayons lumineux émis par une source lumineuse (10) de sorte que l'axe optique (16) de la lentille (15) soit parallèle à l'axe principal d'émission (13) de la source lumineuse (10), la lentille (15) présentant, dans le sens de propagation des rayons lumineux, une face d'entrée (20) et une face de sortie (30), et possédant une forme générale bombée en direction de la face de sortie (30), la lentille (15) définissant un axe dit vertical (Z), un axe dit transversal (Y) et présentant en outre un premier plan médian (P1) dit vertical, s'étendant dans un plan (X,Z) et un deuxième plan médian (P2) dit horizontal, s'étendant dans un plan (Y,Z), **caractérisée en ce que** :
- la face d'entrée (20) comporte :
- une partie supérieure (22) située au-dessus du plan médian horizontal (P2), qui est configurée pour dévier les rayons lumineux, au moins selon l'axe vertical (Z), de sorte qu'ils soient sensiblement parallèles au plan médian horizontal (P2) ;
- et une partie inférieure (23) située au-dessous du plan médian horizontal (P2), qui est configurée pour réduire l'angle d'ouverture verticale (α) du faisceau lumineux, selon l'axe vertical (Z), entre le plan médian horizontal (P2) et une limite inférieure (41, 43, 44) ;
- la face de sortie (30) comporte :
- une partie verticale centrale (31) sensiblement plane et orthogonale à l'axe optique (16) ;
- de part et d'autre de la partie verticale centrale (31), une partie latérale (32) configurée pour dévier chaque rayon lumineux en direction du plan médian vertical (P1), selon une amplitude de déviation qui est d'autant plus importante que le point d'incidence du rayon lumineux sur ladite partie latérale (32) est proche du plan médian vertical (P1).

2. Lentille selon la revendication 1, **caractérisée en ce que** la face d'entrée (20) présente, dans un plan (X,Z), un profil concave formant un bossage (21) dirigé à l'opposé de la face de sortie (30).

3. Lentille selon la revendication 2, **caractérisée en ce que** le bossage (21) est situé au voisinage de l'axe optique (16).

4. Lentille selon la revendication 2 ou 3, **caractérisée en ce que**, dans un plan (X,Z), au moins au voisinage du plan médian vertical (P1), et à distance du bossage (21) :
- la partie supérieure (22) de la face d'entrée (20) est sensiblement plane ou possède un très grand rayon de courbure ;
- la partie inférieure (23) est sensiblement plane ou possède un très grand rayon de courbure, et, par rapport au symétrique (S) de la partie supérieure (22) par rapport à l'axe optique (16) :
- la partie inférieure (23) est décalée le long de l'axe optique (16) en s'éloignant de la face de sortie (30)
- et/ou l'angle aigu formé entre ladite partie inférieure (23) et l'axe optique (16) est plus grand.

5. Lentille selon l'une des revendications 1 à 4, **caractérisée en ce que** la face d'entrée (20) possède une forme de type « en selle de cheval », la face d'entrée (20) présentant, dans un plan (X,Y), un profil concave et, dans un plan (X,Z), un profil convexe formant un bossage (21) dirigé à l'opposé de la face de sortie (30).

6. Lentille selon l'une des revendications 1 à 5, **caractérisée en ce que** le plan médian vertical (P1) est un plan de symétrie de la face d'entrée (20) de la lentille (15).

7. Lentille selon l'une des revendications 1 à 6, **caractérisée en ce que** la partie inférieure (23) de la face d'entrée (20) est configurée pour diminuer l'angle d'ouverture verticale (α) du faisceau lumineux par rapport à l'axe optique (16), selon l'axe vertical (Z), de sorte que la limite inférieure (43) du faisceau lumineux à l'intérieur de la lentille (15) fasse avec l'axe optique (16) un angle (al) compris entre 15% et 40 %, voire entre 20% et 35%, de l'angle (α0) entre la limite inférieure (41) du faisceau incident (40) et l'axe optique (16).

8. Lentille selon l'une des revendications 1 à 7, **caractérisée en ce que** la partie supérieure (22) et/ou la partie inférieure (23) de la face d'entrée (20) est en outre configurée pour réduire l'angle d'ouverture horizontale (β) du faisceau lumineux, selon l'axe transversal (Y).

9. Lentille selon l'une des revendications 1 à 8, **caractérisée en ce que** chacune des parties latérales (32) de la face de sortie (30) présente une forme qui est incurvée autour d'un axe vertical, la concavité étant tournée vers la face d'entrée (20), et qui présente un rayon de courbure, dans un plan (X,Y), qui augmente lorsque l'on s'éloigne du plan médian vertical (P1).

10. Lentille selon l'une des revendications 1 à 9, **caractérisée en ce que** chacune des parties latérales (32) de la face d'entrée (20) est en outre configurée pour modifier l'angle d'ouverture verticale (α) du faisceau lumineux par rapport à l'axe optique (16), selon l'axe vertical (Z), entre le plan médian horizontal (P2) et une limite inférieure (43, 44).

11. Lentille selon l'une des revendications 1 à 9, **caractérisée en ce que** le plan médian vertical (P1) est un plan de symétrie de la face de sortie (30) de la lentille (15), et/ou **en ce que** le plan médian horizontal (P2) est un plan de symétrie de la face de sortie (30) de la lentille (15).

12. Feu de travail (1) comportant un boîtier (2), une pluralité de sources lumineuses (10) disposées dans le boîtier, **caractérisé en ce qu'**il comprend une lentille (15) selon l'une des revendications précédentes disposée en regard d'au moins l'une des sources lumineuses (15), sur le trajet des rayons lumineux émis par ladite source lumineuse (10), et de sorte que l'axe optique (16) de la lentille (15) soit parallèle à l'axe principal d'émission (13) de ladite source lumineuse (10).

13. Véhicule (V), en particulier véhicule lourd tel qu'un camion, **caractérisé en ce qu'**il comprend au moins un feu de travail (1) selon la revendication 12, le feu de travail (1) étant monté sur le véhicule (V) au moyen d'un support (3) qui est de préférence configuré pour permettre d'incliner le feu de travail (1) autour d'un axe horizontal (5).

## Patentansprüche

1. Linse (15), die eine optische Achse (16) aufweist, die sich entlang einer sogenannten Längsachse (X) erstreckt, die dazu bestimmt ist, in den Gang der Lichtstrahlen platziert zu werden, die von einer Lichtquelle (10) ausgesendet werden, sodass die optische Achse (16) der Linse (15) parallel zur Hauptaussendungsachse (13) der Lichtquelle (10) verläuft, wobei die Linse (15) in der Ausbreitungsrichtung der Lichtstrahlen eine Eintrittsseite (20) und eine Austrittsseite (30) aufweist, und in Richtung der Austrittsseite (30) eine allgemeine ballige Form besitzt, wobei die Linse (15) eine sogenannte vertikale Achse (Z), eine sogenannte Querachse (Y) definiert, und weiter eine erste sogenannte vertikale Mittelebene (P1), die sich in einer Ebene (X, Z) erstreckt, und eine zweite sogenannte horizontale Mittelebene (P2) aufweist, die sich in einer Ebene (Y, Z) erstreckt, **dadurch gekennzeichnet, dass**:
- die Eintrittsseite (20) beinhaltet:
-- einen oberen Teil (22), der sich oberhalb der horizontalen Mittelebene (P2) befindet, der konfiguriert ist, um die Lichtstrahlen mindestens entlang der vertikalen Achse (Z) derart umzuleiten, dass sie im Wesentlichen parallel zur horizontale Mittelebene (P2) verlaufen;
-- und einen unteren Teil (23), der sich unterhalb der horizontalen Mittelebene (P2) befindet, der konfiguriert ist, um den vertikalen Öffnungswinkel (*α*) des Lichtstrahls entlang der vertikalen Achse (Z) zwischen der horizontalen Mittelebene (P2) und einer unteren Grenze (41, 43, 44) zu verringern;
- die Austrittsseite (30) beinhaltet:
-- einen zentralen vertikalen Teil (31), der im Wesentlichen eben und orthogonal zur optischen Achse (16) verläuft;
-- beiderseits des zentralen vertikalen Teils (31) einen Seitenteil (32), der konfiguriert ist, um jeden Lichtstrahl in Richtung der vertikalen Mittelebene (P1) entsprechend einer Umleitungsamplitude umzuleiten, die umso größer ist, je näher die Einfallsstelle des Lichtstrahls auf dem Seitenteil (32) zu der vertikalen Mittelebene (P1) liegt.

2. Linse nach Anspruch 1, **dadurch gekennzeichnet, dass** die Eintrittsseite (20) in einer Ebene (X, Z) ein konkaves Profil aufweist, das einen Buckel (21) bildet, der gegenläufig zur Austrittseite (30) gerichtet ist.

3. Linse nach Anspruch 2, **dadurch gekennzeichnet, dass** sich der Buckel (21) benachbart zur optischen Achse (16) befindet.

4. Linse nach Anspruch 2 oder 3, **dadurch gekennzeichnet, dass** in einer Ebene (X, Z), mindestens benachbart zur vertikalen Mittelebene (P1) und im Abstand zum Buckel (21):
- der obere Teil (22) der Eintrittsseite (20) im Wesentlichen eben ist oder einen sehr großen Krümmungsradius besitzt;
- der untere Teil (23) im Wesentlichen eben ist oder einen sehr großen Krümmungsradius besitzt, und in Bezug auf die Symmetrie (S) des oberen Teils (22) in Bezug auf die optische Achse (16):
-- der untere Teil (23) entlang der optischen Achse (16) versetzt ist, und sich von der Austrittsseite (30) entfernt
-- und/oder der spitze Winkel, der zwischen dem unteren Teil (23) und der optischen Achse (16) gebildet wird, größer ist.

5. Linse nach einem der Ansprüche 1 bis 4, **dadurch gekennzeichnet, dass** die Eintrittsseite (20) eine Form in der Art eines "Pferdesattels" besitzt, wobei die Eintrittsseite (20) in einer Ebene (X, Y) ein konkaves Profil, und in einer Ebene (X, Z) ein konvexes Profil, das einen Buckel (21) bildet, der gegenläufig zur Austrittsseite (30) ausgerichtet ist, aufweist.

6. Linse nach einem der Ansprüche 1 bis 5, **dadurch gekennzeichnet, dass** die vertikale Mittelebene (P1) eine Symmetrieebene der Eintrittsseite (20) der Linse (15) ist.

7. Linse nach einem der Ansprüche 1 bis 6, **dadurch gekennzeichnet, dass** der untere Teil (23) der Eintrittsseite (20) konfiguriert ist, um den vertikalen Öffnungswinkel (*α*) des Lichtstrahls in Bezug auf die optische Achse (16) entlang der vertikalen Achse (Z) derart zu verringern, sodass die untere Grenze (43) des Lichtstrahls im Inneren der Linse (15) mit der optischen Achse (16) einen Winkel (*α*1), der zwischen 15% und 40%, oder gar zwischen 20% und 35% des Winkels (*α*0) zwischen der unteren Grenze (41) des einfallenden Strahls (40) und der optischen Achse (16) liegt, einschlägt.

8. Linse nach einem der Ansprüche 1 bis 7, **dadurch gekennzeichnet, dass** der obere Teil (22) und/oder der untere Teil (23) der Eintrittsseite (20) weiter konfiguriert ist, um den horizontalen Öffnungswinkel (*β*) des Lichtstrahls entlang der Querachse (Y) zu verringern.

9. Linse nach einem der Ansprüche 1 bis 8, **dadurch gekennzeichnet, dass** jeder der Seitenteile (32) der Austrittsseite (30) eine Form aufweist, die um eine vertikale Achse herum gekrümmt ist, wobei die Konkavität zur Eintrittsseite (20) gedreht ist, und die einen Krümmungsradius in einer Ebene (X, Y) aufweist, der sich bei Entfernung von der vertikalen Mittelebene (P1) vergrößert.

10. Linse nach einem der Ansprüche 1 bis 9, **dadurch gekennzeichnet, dass** jeder der Seitenteile (32) der Eintrittsseite (20) weiter konfiguriert ist, um den vertikalen Öffnungswinkel (*α*) des Lichtstrahls in Bezug auf die optische Achse (16) entlang der vertikalen Achse (Z) zwischen der horizontalen Mittelebene (P2) und einer unteren Grenze (43, 44) zu ändern.

11. Linse nach einem der Ansprüche 1 bis 9, **dadurch gekennzeichnet, dass** die vertikale Mittelebene (P1) eine Symmetrieebene der Austrittsseite (30) der Linse (15) ist, und/oder dadurch, dass die horizontale Mittelebene (P2) eine Symmetrieebene der Austrittsseite (30) der Linse (15) ist.

12. Arbeitsscheinwerfer (1), der ein Gehäuse (2), eine Vielzahl von Lichtquellen (10), die in dem Gehäuse angeordnet sind, beinhaltet, **dadurch gekennzeichnet, dass** er eine Linse (15) nach einem der vorstehenden Ansprüche umfasst, die gegenüber mindestens einer der Lichtquellen (15) in dem Gang der Lichtstrahlen angeordnet ist, die von der Lichtquelle (10) ausgesendet werden, sodass die optische Achse (16) der Linse (15) parallel zur Hauptaussendungsachse (13) der Lichtquelle (10) verläuft.

13. Fahrzeug (V), insbesondere ein Schwerfahrzeug, wie ein Lastwagen, **dadurch gekennzeichnet, dass** es mindestens einen Arbeitsscheinwerfer (1) nach Anspruch 12 umfasst, wobei der Arbeitsscheinwerfer (1) anhand einer Stütze (3) an dem Fahrzeug (V) angebracht ist, die vorzugsweise konfiguriert ist, um es zu ermöglichen, den Arbeitsscheinwerfer (1) um eine horizontale Achse (5) herum zu neigen.

## Claims

1. A lens (15) having an optical axis (16) extending according to a so-called longitudinal axis (X), intended to be placed on the path of the light rays emitted by a light source (10) so that the optical axis (16) of the lens (15) is parallel to the main axis of emission (13) of the light source (10), the lens (15) having, in the direction of propagation of the light rays, an input face (20) and an output face (30), and having a general shape cambered in the direction of the output face (30), the lens (15) defining a so-called vertical axis (Z), a so-called transverse axis (Y) and further having a so-called vertical first midplane (P1), extending in a plane (X, Z) and a so-called horizontal second midplane (P2), extending in a plane (Y, Z), **characterized in that**:
- the input face (20) includes:
- an upper portion (22) located above the horizontal midplane (P2), which is configured to divert the light rays, at least according to the vertical axis (Z), so that they are substantially parallel to the horizontal midplane (P2);
- and a lower portion (23) located below the horizontal midplane (P2), which is configured to reduce the vertical opening angle (α) of the light beam, according to the vertical axis (Z), between the horizontal midplane (P2) and a lower limit (41, 43, 44);
- the output face (30) includes:
- a central vertical portion (31) substantially planar and orthogonal to the optical axis (16);
- on either side of the central vertical portion (31), a lateral portion (32) configured to divert each light ray in the direction of the vertical midplane (P1), according to an amplitude of deflection that is even larger as the point of incidence of the light ray on said lateral portion (32) is close to the vertical midplane (P1).

2. The lens according to claim 1, **characterized in that** the input face (20) has, in a plane (X, Z), a concave profile forming a boss (21) directed opposite to the output face (30).

3. The lens according to claim 2, **characterized in that** the boss (21) is located in the vicinity of the optical axis (16).

4. The lens according to claim 2 or 3, **characterized in that**, in a plane (X, Z), at least in the vicinity of the vertical midplane (P1), and at a distance from the boss (21):
- the upper portion (22) of the input face (20) is substantially planar or has a very large radius of curvature;
- the lower portion (23) is substantially planar or has a very large radius of curvature and, with regards to the symmetrical (S) of the upper portion (22) with respect to the optical axis (16):
- the lower portion (23) is shifted along the optical axis (16) when getting away from the output face (30)
- and/or the acute angle formed between said lower portion (23) and the optical axis (16) is larger.

5. The lens according to any of claims 1 to 4, **characterized in that** the input face (20) has a « horse saddle » type shape, the input face (20) having, in a plane (X, Y), a concave profile and, in a plane (X, Z), a convex profile forming a boss (21) directed opposite to the output face (30).

6. The lens according to any of claims 1 to 5, **characterized in that** the vertical midplane (P1) is a plane of symmetry of the input face (20) of the lens (15).

7. The lens according to any of claims 1 to 6, **characterized in that** the lower portion (23) of the input face (20) is configured to reduce the vertical opening angle (α) of the light beam with respect to the optical axis (16), according to the vertical axis (Z), so that the lower limit (43) of the light beam inside the lens (15) forms with the optical axis (16) an angle (α1) comprised between 15% and 40%, still between 20% and 35%, of the angle (α0) between the lower limit (41) of the incident beam (40) and the optical axis (16).

8. The lens according to any of claims 1 to 7, **characterized in that** the upper portion (22) and/or the lower portion (23) of the input face (20) is further configured to reduce the horizontal opening angle (β) of the light beam, according to the transverse axis (Y).

9. The lens according to any of claims 1 to 8, **characterized in that** each of the lateral portions (32) of the output face (30) has a shape that is curved around a vertical axis, the concavity being directed towards the input face (20), and which has a radius of curvature, in a plane (X, Y), that increases when getting away from the vertical midplane (P1).

10. The lens according to any of claims 1 to 9, **characterized in that** each of the lateral portions (32) of the input face (20) is further configured to modify the vertical opening angle (α) of the light beam with respect to the optical axis (16), according to the vertical axis (Z), between the horizontal midplane (P2) and a lower limit (43, 44).

11. The lens according to any of claims 1 to 9, **characterized in that** the vertical midplane (P1) is a plane of symmetry of the output face (30) of the lens (15), and/or **in that** the horizontal midplane (P2) is a plane of symmetry of the output face (30) of the lens (15).

12. A work light (1) including a case (2), a plurality of light sources (10) disposed in the case, **characterized in that** it comprises a lens (15) according to any of the preceding claims disposed opposite at least one of the light sources (15), on the path of the light rays emitted by said light source (10), and so that the optical axis (16) of the lens (15) is parallel to the main axis of emission (13) of said light source (10).

13. A vehicle (V), in particular a heavy vehicle such as a truck, **characterized in that** it comprises at least one work light (1) according to claim 12, the work light (1) being mounted on the vehicle (V) by means of a support (3) which is preferably configured to allow tilting the work light (1) about a horizontal axis (5).
